Europäisches Patentamt

European Patent Office

Office européen des brevets

(19)

(11) Veröffentlichungsnummer: **0 207 335**
**B1**

(12) **EUROPÄISCHE PATENTSCHRIFT**

(45) Veröffentlichungstag der Patentschrift: **26.09.90**

(21) Anmeldenummer: **86107958.0**

(22) Anmeldetag: **11.06.86**

(51) Int. Cl.⁵: **A 61 C 9/00,** B 01 F 9/00

(54) **Gerät zur Herstellung von Abdruckmassen.**

(30) Priorität: **20.06.85 CH 2628/85**

(43) Veröffentlichungstag der Anmeldung:
**07.01.87 Patentblatt 87/02**

(45) Bekanntmachung des Hinweises auf die
Patenterteilung:
**26.09.90 Patentblatt 90/39**

(84) Benannte Vertragsstaaten:
**DE FR GB IT**

(56) Entgegenhaltungen:
**DE-A-2 001 301**
**DE-A-2 209 850**
**US-A-4 497 581**

(73) Patentinhaber: **MIKRONA TECHNOLOGIE AG**
**Weingartenstrasse 8**
**CH-8957 Spreitenbach (CH)**

(72) Erfinder: **MIKRONA TECHNOLOGIE AG**
**Weingartenstrasse 8**
**CH-8957 Spreitenbach (CH)**

(74) Vertreter: **EGLI-EUROPEAN PATENT**
**ATTORNEYS**
**Horneggstrasse 4**
**CH-8008 Zürich (CH)**

Courier Press, Leamington Spa, England.

## Beschreibung

Die Erfindung betrifft ein Gerät Herstellung von Abdruckmassen, nach dem Oberbegriff des Patentansprüchs 1.

Es sind verschiedene Geräte bekannt, mit denen Abdruckmassen, wie sie vor allem im zahnärztlichen Bereich benötigt werden, hergestellt werden können. Bei diesen Geräten wird gefordert, dass die Mischung der Trockensubstanz mit der Flüssigkeit blasenfrei erfolgt.

Bei einem bekannten Mischgerät für zahnärztliche Abdruckmassen (DE-OS 27 13 152) wird ein Mischbecher eingesetzt, der Oeffnungen aufweist, in die Finger des Mischgerätes ragen. Im Deckel des Mischbechers sind weitere Finger angeordnet, die im Abstand zu den erstgenannten Fingern angeordnet sind. Das Mischen der Abdruckmasse erfolgt durch Rotation der erstgenannten Finger. Nachteilig ist jedoch, dass durch die Bewegung der rotierenden Finger im Mischbecher ein Bereich mit schlechter Durchmischung entsteht, so dass die Mischung der Abdruckmasse nicht gleichmässig ist. Bei einem weiteren bekannten Mischgerät (DE-OS 30 22 689) ist der Mischbecher als Schüssel mit einem ringförmigen Kanal ausgebildet, dessen Profil V-förmig ist. In diesen Kanal ragt ein rotierender Gegenkegel mit senkrechter Drehachse. Die Mischung erfolgt durch Drehung der Schüssel und Rotation des Gegenkegels. Der Antrieb erfolgt mit Hilfe von Hülltrieben, einerseits für den Antrieb des Gegenkegels und andererseits für den Antrieb der Schüssel. Das Gerät ist deshalb in seinem Aufbau verhältnismässig aufwendig und wegen der besonderen Form der Schüssel entsprechend gross.

Aus DE-A-2 209 850 ist eine Vorrichtung zum Mischen von Stoffen bekannt, bei welcher ein rotierender Arm ein gegenläufig rotierendes Mischgefäss trägt. Ueber einen Antriebsmotor wird über ein erstes Zahnradgetriebe die den Arm tragende Welle und über ein zweites Zahnradgetriebe das Mischgefäss gegenläufig angetrieben. Die Verwendung zweier Zahnradgetriebe für den Antrieb des Arms und des Mischgefässes stellt eine verhältnismässig aufwendige Lösung dar.

Aus US-A-4 497 581 ist ein weiteres Mischgerät bekannt, dessen auf einem Arm gelagertes Mischgefäss auf einer Achse drehbar ist, welche über einen Riementrieb mit einem in der Achse des Armes feststehenden Rad verbunden ist. Durch das Zentrum des feststehenden Rades erstreckt sich die von einem Motor angetriebene Welle des Armes. Der Riementrieb zum Antrieb des Mischgefässes wird, damit er nicht am Dreharm anliegt, über Führungsrollen geführt, trotzdem führt die nichtfluchtende Anordnung der beiden Räder zu einer erheblichen Abnützung, da das Mischgefäss mit hoher Drehzahl umläuft.

Hier setzt die Erfindung ein, der die Aufgabe zugrundeliegt, ein Gerät zur Herstellung von Abdruckmassen der eingangs beschriebenen Art so auszugestalten, dass das Gerät in seinem Aufbau einfach ist, dass jedoch der Antrieb des auf einem rotierenden Dreharm rotierenden Mischbechers störungsfrei läuft und eine lange Lebensdauer aufweist.

Diese Aufgabe wird gemäss der Erfindung durch die kennzeichnenden Merkmale des Patentanspruchs 1 gelöst.

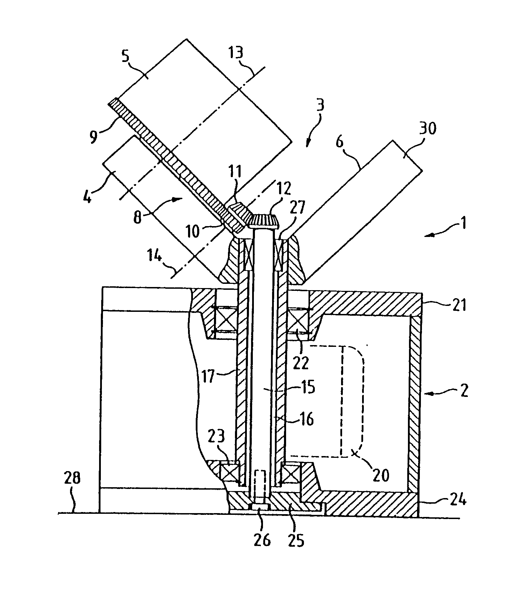

Die Erfindung ist in der Zeichnung in einem Ausführungsbeispiel dargestellt und nachfolgend beschrieben. Die Figur zeigt.

eine schematisch dargestellte Ausführungsform eines Gerätes zur Herstellung von Abdruckmassen, bei dem für den Antrieb des Mischgefässes ein Umlaufgetriebe auf der Innenseite des rotierenden Dreharmes angeordnet ist.

In der Figur weist das mit 1 bezeichnete Gerät zur Herstellung von Abdruckmassen ein Gehäuse 2 auf, das gleichzeitig als Fundament des Gerätes dient. Ueber dem Gehäuse 2 ist der eigentliche Mischteil 3 angeordnet, der sich aus einem rotierenden Dreharm 4, einem auf dem Dreharm 4 drehbar gelagerten Mischgefäss 5 und einem auf der Innenseite des Dreharmes 4 angeordneten Umlaufgetriebe 8 für die Erzielung einer gegenläufigen Drehung des Mischgefässes 5 zu dem Dreharm 4 zusammensetzt.

Das Umlaufgetriebe 8 setzt sich aus einem ersten Räderpaar 9, 10 und einem zweiten Räderpaar 11, 12 zusammen. Das Rad 9 des ersten Räderpaares liegt zentrisch zur Drehachse 13 des Mischgefässes 5, wobei das Mischgefäss 5 und das Zahnrad 9 miteinander verbunden sein können. Das Mischgefäss 5 ist mit dem Zahnrad 9 im Dreharm 4 in einer Lagerung (nicht dargestellt) gelagert. Das andere Zahnrad 10 des ersten Räderpaares weist eine zur Drehachse 13 exzentrische, jedoch parallele Drehachse 14 auf. Das andere Zahnrad 10 trägt das erste Zahnrad 11 des zweiten Räderpaares, das als Kegelrad ausgebildet ist. Ebenso ist das zweite Zahnrad 12 des zweiten Räderpaares als Kegelrad ausgebildet, so dass die Zahnräder 11, 12 des zweiten Räderpaares ein Winkelgetriebe bilden. Das zweite Zahnrad 12 des zweiten Räderpaares ist am End einer stationären Welle 15 befestigt, die sich durch die Drehachse des Dreharmes den Dreharm 4 erstreckt. Die stationäre Welle 15 durchdringt in einer Bohrung 16 eine Hohlwelle 17, die die Antriebswelle des Dreharmes 4 bildet. Die Hohlwelle 17 ist ein Teil eines im Gehäuse 2 untergebrachten Elektromotors 20, der einerseits den Dreharm 4 und andererseits über das Umlaufgetriebe 8 das Mischgefäss 5 in Drehung versetzt.

Das Gehäuse 2 weist einen Deckel 21 auf in welchem ein, Lager 22, z.B. ein Wälzlager, zur Lagerung der Hohlwelle 17 eingesetzt ist. Ein weiteres Lager 23 ist im Boden 24 des Gehäuses 2 für die Lagerung der Hohlwelle 17 angeordnet. Im Boden 24 ist ein Deckel 25 eingesetzt, an dem die stationäre Welle 15 mit dem zweiten Zahnrad 12 des zweiten Räderpaares mittels einer Schraube 26 festgehalten ist. Die stationäre Welle 15 ist gegenüber der Hohlwelle 17 mit einem Lager 27 geführt. Das Gehäuse 2 kann in geeigneter Weise auf einer Unterlage 28 abgestützt oder befestigt sein, so dass eine Drehung des Gehäuses 2 im Betrieb des Mischgerätes 1 verhindert wird.

Beim Betrieb des Mischers wird das mit einer Trockensubstanz und einer Flüssigkeit beschickte Mischgefäss 5 auf dem Dreharm 4 aufgesetzt und der Motor 20 in Betrieb gesetzt. Das erste Zahnrad 11 des zweiten Räderpaares rollt am feststehenden zweiten Zahnrad 12 des zeiten Räderpaares ab, wodurch über das zweite Zahnrad 10 des ersten Räderpaares das erste Zahnrad 9 und damit das Mischgefäss 5 in Drehung versetzt werden. Durch die Ausbildung des Umlaufgetriebes wird erreicht, dass das Mischgefäss 5 entgegengesetzt der Drehrichtung des Dreharmes 4 rotiert. Der Dreharm 4 ist mit einem gegenüberliegenden zweiten Dreharm 30 versehen, der als Ausgleichsgewicht für den Dreharm 4 mit dem Mischgefäss 5 dient. Das Umlaufgetriebe 8 ist hier auf der Innenseite 6 des Dreharmes 4 angeordnet.

Das beschriebene Gerät zur Herstellung von Abdruckmassen dient vor allem zur Herstellung zahnärztlicher Abdruckmassen, z.B. zum Mischen von Alginat-Pulver mit Wasser, aber auch von Einkomponenten- oder Mehrkomponenten-Pasten. Damit können Formmassen zur Herstellung von Kiefer- und Zahnabdrücken blasenfrei und schnell gleichmässig gemischt werden. Das Umlaufgetriebe 8 kann ausreichend stark dimensioniert werden, so dass ein zuverlässiger und langdauernder Betrieb mit dem Mischgerät möglich ist. Selbstverständlich können auch andere Materialien in dem beschriebenen Gerät gemischt werden.

## Patentansprüche

1. Gerät zur Herstellung von Abdruckmassen, insbesondere für zahnärztliche Zwecke, durch Mischen von pulverförmiger Trockensubstanz und Flüssigkeit in einem Mischgefäss (5), das auf einem Dreharm (4) drehbar gelagert ist, welcher auf der Welle (17) eines in einem Gehäuse (2) gelagerten Motors befestigt ist, wobei zur gegenläufigen Drehung des Dreharmes (4) und des Mischgefässes (5) das auf dem Dreharm gelagerte Mischgefäss über ein umlaufendes Zahnradgetriebe (8) angetrieben ist, dadurch gekennzeichnet, dass ein Räderpaar (9, 10) des Zahnradgetriebes auf dem Dreharm (4) gelagert ist, wobei das eine Zahnrad (9) zentrisch zu der Achse (13) des Mischgefässes und das andere Zahnrad (10) des Räderpaares exzentrisch dazu angeordnet ist, auf dessen Achse (14) ein erstes Zahnrad (11) eines Winkelgetriebes (11, 12) mit dem anderen Zahnrad (10) fest verbunden gelagert ist, wobei das zweite Zahnrad (12) des Winkelgetriebes feststehend auf einer Achse (15) befestigt ist, welche die als Hohlwelle ausgebildete Motorwelle (17) zentrisch durchdringt, im Boden (24) des Gehäuses (2) fest gelagert ist und mit ihrem oberen Ende über die Motorwelle ragt, und dass das Winkelgetriebe (11, 12) zusammen mit dem Räderpaar (9, 10) auf der mischgefässeitigen, innenliegenden Seite (6) des Dreharms (4) angeordnet ist.

2. Gerät nach Anspruch 1, dadurch gekennzeichnet, dass der Dreharm (4) mit einem gegenüberliegenden, für den Gewichtsausgleich genützten Dreharm (30) versehen ist.

## Revendications

1. Appareil pour la fabrication de masses à modeler par pression destinées notamment à être utilisées en dentisterie, par mélange d'une substance sèche pulvérulente et d'un liquide dans un récipient de mélange (5) monté sur paliers de manière à pouvoir tourner sur un bras rotatif (4) fixé sur l'arbre (17) d'un moteur monté sur paliers dans une enveloppe (2), la rotation en sens inverse du bras rotatif (4) et du récipient de mélange (5) résultant du fait que le récipient de mélange monté sur palier sur le bras rotatif est entraîné par un engrenage (8) d'entraînement en rotation, caractérisé en ce qu'une paire de roues (9, 10) de l'engrenage est montée sur paliers sur l'arbre rotatif (4), l'une des roues (9) étant centrée sur l'axe (13) du récipient de mélange et l'autre roue dentée (10) de la paire de roues étant excentrée par rapport à cet axe et portant, sur son axe (14), une première roue dentée (11) d'un engrenage angulaire (11, 12) qui est solidement reliée à l'autre roue dentée (10), la deuxième roue dentée (12) de l'engrenage angulaire étant montée à poste fixe sur un axe (15) qui traverse axialement l'arbre creux qui constitue l'arbre de moteur (17), est monté solidement sur palier au fond (24) de l'enveloppe (2) et, par son extrémité supérieure, dépasse l'arbre de moteur et en ce que l'engrenage angulaire (II, 12) et la paire de roues (9, 10) sont montés du côté intérieur (6) du bras rotatif (4), où se trouve le récipient de mélange.

2. Appareil selon la revendication 1, caractérisé en ce que le bras rotatif (4) est associé à un bras rotatif (30) qui est situé en face de lui et assure l'équilibrage des poids.

## Claims

1. Device for the manufacture of casting compositions, particularly for dental purposes, by mixing powdery dry substance and liquid in a mixing vessel (5) which is rotatably mounted on a rotating arm (4) which is fixed on the shaft (17) of a motor mounted in a housing (2), wherein for counterrunning rotation of the rotating arm (4) and of the mixing vessel (5), the mixing vessel mounted on the rotating arm is driven by means of an orbiting gear drive (8), characterised in that a gear pair (9, 10) of the gear drive is mounted on the rotating arm (4) wherein the one toothed wheel (9) is arranged centrally to the axis (13) of the mixing vessel and the other toothed wheel (10) of the pair of wheels eccentrically thereto, on the axis (14) of which a first toothed wheel (11) of a bevel gear (11, 12) is mounted fixed with respect to the other toothed wheel (10) wherein the second toothed wheel (12) of the bevel gear is fixed stationary to an axle (15), which penetrates centrally through the motor shaft (17) constructed as a hollow shaft, is fixedly mounted in the floor (24) of the housing (2), and projects with its upper end over the motor shaft, and that the bevel gear drive (11, 12) together with the gear pair (9, 10) is arranged on the mixing vessel side, inwards lying side (6) of the rotating arm (4).

2. Device according to Claim 1, characterised in that the rotating arm (4) is provided with an oppositely lying rotating arm (30) used for weight compensation.